# EUROPEAN PATENT APPLICATION

(11) **EP 4 418 262 A1**
(43) Date of publication of application: **21.08.2024**
(21) Application number: 21960670.4
(22) Date of filing: 15.10.2021
(51) Int. Cl.: G10L 13/00

(54) **AUDIO OUTPUT DEVICE, AUDIO OUTPUT METHOD, PROGRAM, AND STORAGE MEDIUM**

(71) Applicant: Pioneer Corporation, Tokyo 113-0021 (JP)
(72) Inventor: IIZAWA, Takashi, Kawagoe-shi, Saitama 350-8555 (JP); KURAMOCHI, Keita, Tokyo 113-0021 (JP); YAMANAKA, Atsuhiro, Kawagoe-shi, Saitama 350-8555 (JP); FUJIWARA, Toshiki, Kawagoe-shi, Saitama 350-8555 (JP); OHNO, Takashi, Kawagoe-shi, Saitama 350-8555 (JP); KINOSHITA, Eisuke, Kawagoe-shi, Saitama 350-8555 (JP)
(74) Representative: Viering, Jentschura & Partner mbB Patent- und Rechtsanwälte
(86) International application number: PCT/JP2021/038221
(87) International publication number: WO 2023/062814

(57) **Abstract**

In the voice output device, the acquisition means acquires facility information including multiple information with different detail levels from basic information to detailed information. The determination means determines whether or not the voice output device or a facility subject to information provision is within a living area of a user. The output means outputs the facility information including the basic information when the voice output device or the facility subject to the information provision is outside the living area of the user, and outputs the facility information that does not include the basic information when the voice output device or the facility subject to the information provision is within the living area of the user.

## Description

### TECHNICAL FIELD

The present invention relates to techniques available in outputting contents.

### BACKGROUND TECHNIQUE

A voice navigation device is known which does not display a map or the like on a display device and guides to a destination mainly by voice only. Patent Document 1 discloses a communication type voice navigation device for guiding a route to a destination by outputting guide information by voice while communicating with a center.

### RELATED ART REFERENCE

### PATENT REFERENCE

Patent Document 1: Japanese Patent Application Laid-open under No. 2012-2567

### SUMMARY OF THE INVENTION

### PROBLEM TO BE SOLVED BY THE INVENTION

During route guidance to the destination, the facility information on and around the route may be provided to the user. In this case, when the information already known by the user is outputted by voice, the user may feel troublesome, or it may become a load of driving.

The present invention has been made in order to solve the above problem, and a main object thereof is to provide a voice output device capable of appropriately providing information in consideration of the user's degree of recognition regarding facilities and the like.

### MEANS FOR SOLVING THE PROBLEM

An invention described in claims is a voice output device comprising: an acquisition means configured to acquire facility information including multiple information with different detail levels from basic information to detailed information; a determination means configured to determine whether or not the voice output device or a facility subject to information provision is within a living area of a user; and an output means configured to output the facility information including the basic information when the voice output device or the facility subject to the information provision is outside the living area of the user, and output the facility information that does not include the basic information when the voice output device or the facility subject to the information provision is within the living area of the user.

An invention described in claims is a voice output method comprising: acquiring facility information including multiple information with different detail levels from basic information to detailed information; determining whether or not the voice output device or a facility subject to information provision is within a living area of a user; and outputting the facility information including the basic information when the voice output device or the facility subject to the information provision is outside the living area of the user, and outputting the facility information that does not include the basic information when the voice output device or the facility subject to the information provision is within the living area of the user.

An invention described in claims is a program causing a computer to execute processing of: acquiring facility information including multiple information with different detail levels from basic information to detailed information; determining whether or not the voice output device or a facility subject to information provision is within a living area of a user; and outputting the facility information including the basic information when the voice output device or the facility subject to the information provision is outside the living area of the user, and outputting the facility information that does not include the basic information when the voice output device or the facility subject to the information provision is within the living area of the user.

### BRIEF DESCRIPTION OF THE DRAWINGS

[FIG. 1] FIG. 1 is a diagram showing a configuration example of a voice output system according to an embodiment.
[FIG. 2] FIG. 2 is a block diagram showing a schematic configuration of a voice output device.
[FIG. 3] FIG. 3 is a block diagram showing a schematic configuration of a server device.
[FIG. 4] FIG. 4 shows an example of data structure of facility information in the embodiment.
[FIG. 5] FIG. 5 is a flowchart of information providing processing according to a first example.
[FIG. 6] FIG. 6 shows examples of voice outputs of facility information by the voice output device and responses of the user.
[FIG. 7] FIG. 7 is a flowchart of information providing processing according to a second example.
[FIG. 8] FIG. 8 is a flowchart of information providing processing according to a third example.

### MODES FOR EXERCISING THE INVENTION

According to one aspect of the present invention, there is provided a voice output device comprising: an acquisition means configured to acquire facility information including multiple information with different detail levels from basic information to detailed information; a determination means configured to determine whether or not the voice output device or a facility subject to information provision is within a living area of a user; and an output means configured to output the facility information including the basic information when the voice output device or the facility subject to the information provision is outside the living area of the user, and output the facility information that does not include the basic information when the voice output device or the facility subject to the information provision is within the living area of the user.

In the above voice output device, the acquisition means acquires facility information including multiple information with different detail levels from basic information to detailed information. The determination means determines whether or not the voice output device or a facility subject to information provision is within a living area of a user. The output means outputs the facility information including the basic information when the voice output device or the facility subject to the information provision is outside the living area of the user, and outputs the facility information that does not include the basic information when the voice output device or the facility subject to the information provision is within the living area of the user. Thus, the appropriate facility information can be provided to the user according to whether or not the voice output device or the facility is within the living area of the user.

One mode of the above voice output device further comprises a detection means configured to detect a user's response to the outputted facility information, and the output means outputs more detailed information than the outputted facility information from among the multiple information based on the user's response. In this mode, more detailed information is outputted based on the user's response to the outputted facility information.

In another mode of the above voice output device, the output means predicts a degree of user's interest based on the user's response, and outputs the detailed information based on the predicted degree of user's interest. In a preferred example, the output means outputs the detailed information when it is predicted that the degree of user's interest is high. On the other hand, the output means does not output the detailed information when the user's response is not detected.

In still another mode of the above voice output device, the facility information including the basic information and the facility information not including the basic information include the multiple information with different detail levels. In this mode, facility information including multiple information are outputted collectively.

According to another aspect of the present invention, there is provided a voice output method comprising: acquiring facility information including multiple information with different detail levels from basic information to detailed information; determining whether or not the voice output device or a facility subject to information provision is within a living area of a user; and outputting the facility information including the basic information when the voice output device or the facility subject to the information provision is outside the living area of the user, and outputting the facility information that does not include the basic information when the voice output device or the facility subject to the information provision is within the living area of the user. This method also allows appropriate facility information to be provided to the user depending on whether or not the voice output device or the facility is within the user's living area.

According to still another aspect of the present invention, there is provided a program causing a computer to execute processing of: acquiring facility information including multiple information with different detail levels from basic information to detailed information; determining whether or not the voice output device or a facility subject to information provision is within a living area of a user; and outputting the facility information including the basic information when the voice output device or the facility subject to the information provision is outside the living area of the user, and outputting the facility information that does not include the basic information when the voice output device or the facility subject to the information provision is within the living area of the user. By executing this program on a computer, the above-described voice output device can be realized. The program can be stored in a storage medium for use.

### EMBODIMENTS

Preferred embodiments of the present invention will be described below with reference to the attached drawings.

### [System configuration]

### (Overall configuration)

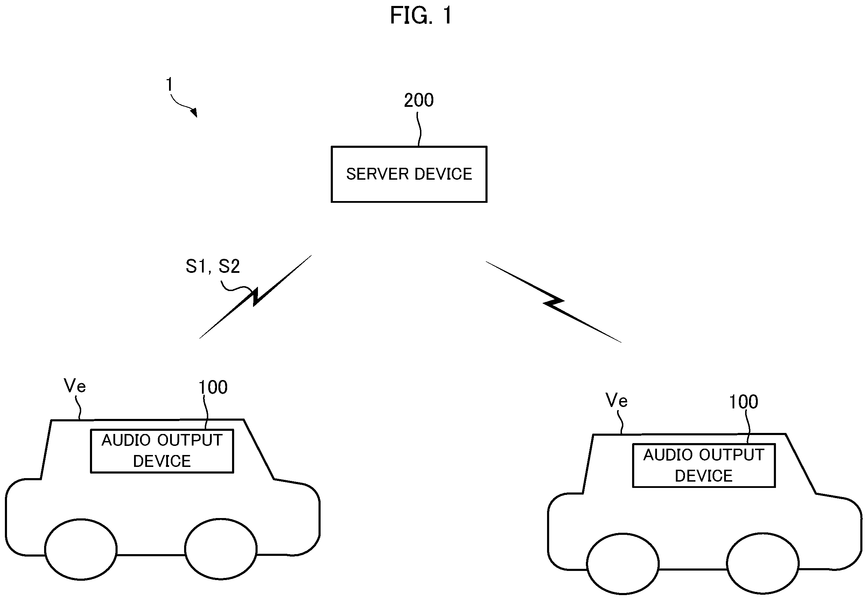

FIG. 1 is a diagram showing a configuration example of a voice output system according to embodiments. The voice output system 1 according to the embodiments includes voice output devices 100 and a server device 200. The voice output device 100 is mounted on a vehicle Ve. The server device 200 communicates with a plurality of voice output devices 100 mounted on a plurality of vehicles Ve.

The voice output device 100 basically performs route guidance processing and information providing processing for a user who is a passenger of the vehicle Ve. For example, when a destination or the like is inputted by the user, the voice output device 100 transmits an upload signal S1 including the position information of the vehicle Ve and the information on the designated destination to the server device 200. The server device 200 refers to the map data, calculates a route to the destination, and transmits a control signal S2 indicating the route to the destination to the voice output device 100. The voice output device 100 performs the route guidance for the user by the voice output, based on the received control signal S2.

Also, the voice output device 100 provides various kinds of information to the user by interacting with the user. For example, when the user makes an information request, the voice output device 100 supplies the server device 200 with the upload signal S1 including information indicating the content or type of the information request and information about the driving state of the vehicle Ve. The server device 200 acquires, generates, and transmits the data requested by the user to the voice output device 100 as the control signal S2 . The voice output device 100 provides the received information to the user by the voice output.

### (Voice output device)

The voice output device 100 moves with the vehicle Ve, and provides voice-based route guidance so that the vehicle Ve travels along the guidance route. Note that "voice-based route guidance" refers to the route guidance in which the user can grasp information required for driving the vehicle Ve along the guidance route at least from voice only, and does not exclude that the voice output device 100 supplementally displays a map or the like around the current position. In the present embodiment, the voice output device 100 outputs various information related to the driving, such as a point on the route at which the guidance is required (also referred to as a "guidance point"), by voice. Here, the guidance point corresponds to, for example, an intersection with a right and left turn of the vehicle Ve, or other important passing points for the vehicle Ve to travel along the guidance route. The voice output device 100 performs voice guidance about the guidance point such as the distance from the vehicle Ve to the next guidance point and the direction of travel at the guidance point, for example. Hereinafter, the voice related to the guidance route is also called "route guidance voice".

The voice output device 100 is mounted, for example, on the top of a windshield or on a dashboard of the vehicle Ve. Incidentally, the voice output device 100 may be incorporated into the vehicle Ve.

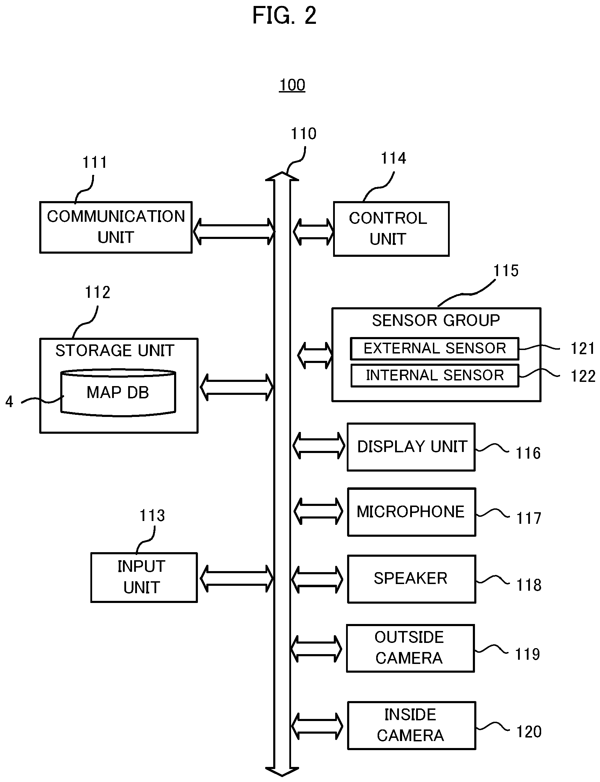

FIG. 2 is a block diagram showing the schematic configuration of the voice output device 100. The voice output device 100 mainly includes a communication unit 111, a storage unit 112, an input unit 113, a control unit 114, a sensor group 115, a display unit 116, a microphone 117, a speaker 118, an outside camera 119, and an inside camera 120. Each element in the voice output device 100 is connected to one another via a bus line 110.

The communication unit 111 performs data communication with the server device 200 based on the control of the control unit 114. The communication unit 111 may receive map data for updating a map DB (DataBase) 4 to be described later from the server device 200, for example.

The storage unit 112 is composed of various memories such as a RAM (Random Access Memory), a ROM (Read Only Memory), a non-volatile memory (including a hard disk drive, a flash memory, etc.). The storage unit 112 stores programs for the voice output device 100 to execute a predetermined processing. The above-described programs may include an application program for performing the route guidance by voice, an application program for playing music, an application program for outputting contents (such as a TV) other than music, and the like. The storage unit 112 is also used as a working memory of the control unit 114. The programs to be executed by the voice output device 100 may be stored in a storage medium other than the storage unit 112.

The storage unit 112 stores the map database (hereinafter, the database is referred to as "DB") 4. The map DB 4 stores various data required for the route guidance. The map DB 4 stores, for example, road data representing the road network by a combination of nodes and links, and facility data indicating facilities that are candidates for a destination, a stopover place, and a landmark. The map DB 4 may be updated based on the map information that the communication unit 111 receives from the map management server under the control of the control unit 114.

The input unit 113 is a button, a touch panel, a remote controller, or the like for the user to make an operation. The display unit 116 is a display that performs display based on the control of the control unit 114. The microphone 117 collects the sound in the vehicle Ve, particularly the utterance of the driver or the like. The speaker 118 outputs route guidance voices to the driver or the like.

The sensor group 115 includes an external sensor 121 and an internal sensor 122. The external sensor 121 includes one or more sensors, such as a lidar, radar, ultrasonic sensor, infra-red sensor, sonar, and the like, for recognizing the surrounding environment of the vehicle Ve. The internal sensor 122 is a sensor that performs positioning of the vehicle Ve, and is a GNSS (Global Navigation Satellite System) receiver, a gyro sensor, an IMU (Inertial Measurement Unit), a vehicle speed sensor, or the combination thereof, for example. The sensor group 115 may include a sensor by which the control unit 114 can derive the position of the vehicle Ve directly or indirectly (i.e., by performing an estimation process) from the outputs of the sensor group 115.

The outside camera 119 is a camera for shooting the outside of the vehicle Ve. The outside camera 119 may be only a front camera that shoots the front of the vehicle, may include a rear camera that shoots the rear of the vehicle in addition to the front camera, and may be an omnidirectional camera that can shoot all around the vehicle Ve. On the other hand, the inside camera 120 is a camera for shooting the interior of the vehicle Ve, and is provided at a position capable of shooting at least the area around the driver's seat.

The control unit 114 includes a CPU (Central Processing Unit), a GPU (Graphics Processing Unit) and controls the entire voice output device 100. For example, the control unit 114 estimates the position (including the direction of the traveling direction) of the vehicle Ve based on the output of one or more sensors of the sensor group 115. When the destination is designated by the input unit 113 or the microphone 117, the control unit 114 generates the route information indicating the guidance route to the destination and performs the voice route guidance based on the route information, the estimated position information of the vehicle Ve, and the map DB 4. In this case, the control unit 114 outputs the route guidance voice from the speaker 118. The control unit 114 controls the display unit 116 to display information of the music being played back, video contents, or a map around the current position. The control unit 114 is an example of an output means, a determination means and a detection means.

The processing executed by the control unit 114 is not limited to being implemented by software based on a program, but may be implemented by any combination of hardware, firmware, and software. The processing executed by the control unit 114 may be implemented by a user-programmable integrated circuit such as a FPGA (field-programmable gate array) or a microcomputer. In that case, the program executed by the control unit 114 in this embodiment may be realized by using this integrated circuit. Thus, the control unit 114 may be implemented by hardware other than a processor.

The configuration of the voice output device 100 shown in FIG. 2 is an example, and various changes may be made to the configuration shown in FIG. 2. For example, instead of storing the map DB 4 in the storage unit 112, the control unit 114 may receive information required for the route guidance from the server device 200 through the communication unit 111. In another example, instead of including the speaker 118, the voice output device 100 may be connected to a voice output unit configured separately from the voice output device 100 by an electrical or known communication means to output the voice from the voice output unit. In this case, the voice output unit may be a speaker provided in the vehicle Ve. In yet another example, the voice output device 100 may not include the display 116. In this case, the voice output device 100 may perform no control related to the display at all, or may perform a predetermined display by electrically connecting to the on-vehicle display unit provided in the vehicle Ve or a user's smartphone by wired or wireless communication. Similarly, instead of including the sensor group 115, the voice output device 100 may acquire information outputted from the sensors attached to the vehicle Ve from the vehicle Ve, using a communication protocol such as a CAN (Controller Area Network).

### (Server device)

Based on the upload signal S1 including the destination or the like received from the voice output device 100, the server device 200 generates the route information indicating the guidance route that the vehicle Ve should travel. Then, the server device 200 generates the control signal S2 related to the information output for the information request of the user based on the information request of the user indicated by the upload signal S1 transmitted by the voice output device 100 thereafter and the traveling state of the vehicle Ve. Then, the server device 200 transmits the generated control signal S2 to the voice output device 100.

In addition, the server device 200 generates the contents for information provision to and interaction with the user of the vehicle Ve and transmits the contents to the voice output device 100. The information provision to the user includes a push-type information provision that starts from the server device 200 when the vehicle Ve becomes a predetermined driving state as a trigger. The interaction with the user is basically the pull-type interaction which starts from the query or question from the user. However, the interaction with user may be initiated from the push-type information provision.

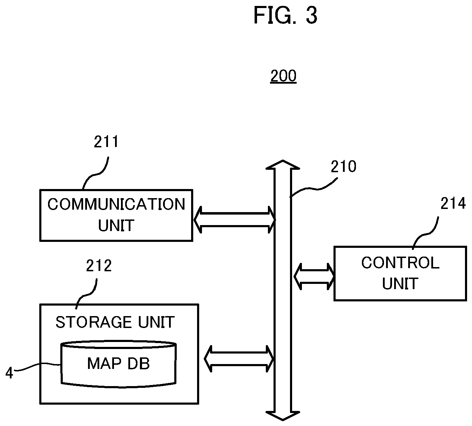

FIG. 3 is a diagram illustrating an example of the schematic configuration of the server device 200. The server device 200 mainly includes a communication unit 211, a storage unit 212, and a control unit 214. Each element in the server device 200 is interconnected via a bus line 210.

The communication unit 211 performs data communication with an external device such as the voice output device 100 based on the control of the control unit 214. The storage unit 212 is configured by various memories such as a RAM, a ROM, a non-volatile memory (including a hard disk drive, a flash memory, etc.). The storage unit 212 stores programs for the server device 200 to execute predetermined processing. The storage unit 212 includes the map DB 4.

The control unit 214 includes a CPU, a GPU and the like, and controls the entire server device 200. The control unit 214 operates together with the voice output device 100 by executing a program stored in the storage unit 212, and executes route guidance processing, information providing processing, or the like for the user. For example, the control unit 214 generates the control signal S2 related to the route information indicating the guidance route or the information output in response to the information request of the user, based on the upload signal S1 received from the voice output device 100 through the communication unit 211. Then, the control unit 214 transmits the generated control signal S2 to the voice output device 100 through the communication unit 211. The control unit 214 is an example of an acquisition means, a determination means, an output means and a detection means.

### [Push-type information provision]

Next, the push-type information provision will be described. Push-type information provision means that when the vehicle Ve becomes a predetermined driving state, the voice output device 100 outputs, to the user, the information related to the driving state by voice. Specifically, the voice output device 100 acquires the driving state information indicating the driving state of the vehicle Ve based on the outputs of the sensor group 115 as described above and transmits the driving state information to the server device 200. The server device 200 stores table data for the push-type information provision in the storage unit 212. The server device 200 refers to the table data. When the driving state information received from the voice output device 100 mounted on the vehicle Ve matches the trigger condition prescribed in the table data, the server device 200 generates the output information using the text data corresponding to the trigger condition, and transmits the output information to the voice output device 100. The voice output device 100 outputs the output information received from the server device 200 by voice. In this way, the information corresponding to the driving state of the vehicle Ve is outputted to the user by voice.

The driving state information may include, for example, at least one piece of information that can be acquired based on the functions of each part of the voice output device 100, such as the position of the vehicle Ve, the direction of the vehicle, the traffic information around the position of the vehicle Ve (including the velocity regulation and the congestion information, etc.), the current time, the destination, and the like. The driving state information may include any one of the voice obtained by the microphone 117 (excluding the utterance of the user), the image captured by the outside camera 119, and the image captured by the inside camera 120. Further, the driving state information may include information received from the server device 200 through the communication unit 111.

### <Provision of facility information>

Next, the provision of facility information will be described as an example of the above-described push-type information provision. Provision of facility information means that the vehicle Ve recommends to the user a facility that exists on or around the route to be traveled.

### [Facility information]

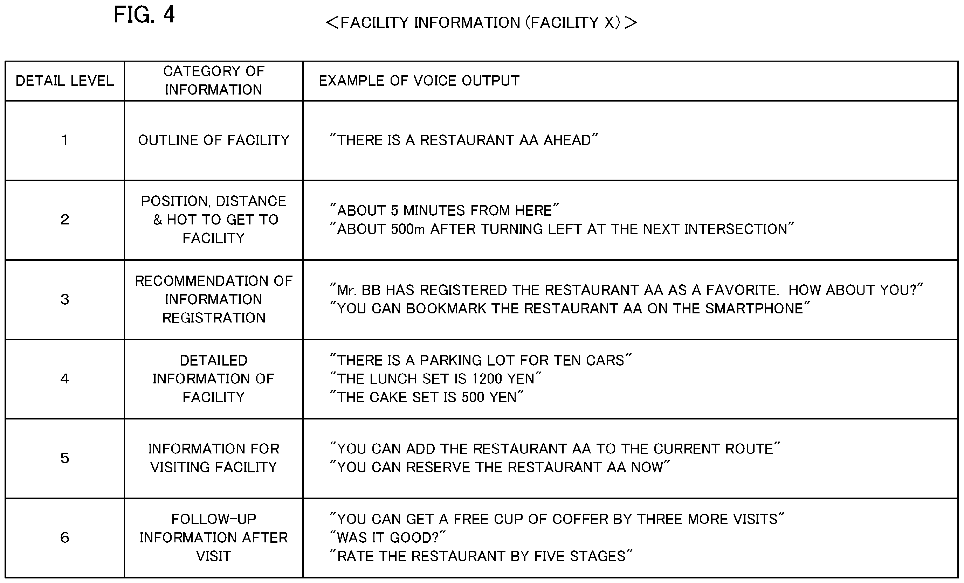

FIG. 4 shows an example of the data structure of facility information in the embodiment. The example shown in FIG. 4 is facility information related to a certain facility X. The facility information is prepared by classifying it into multiple detail levels (six levels in this example) as shown in FIG. 4. In FIG. 4, it is assumed that the smaller the number of the detail level is, the lower the degree of detail is, i.e., the information is schematic, and that the larger the number of the detail level is, the higher the detail degree is, i.e., the information is in detail.

Specifically, the detail level 1 is the level with the lowest degree of detail, and the information of the detail level 1 corresponds to the category such as an outline of facility. An example of the information with the detail level 1 is "There is a restaurant AA ahead."

The detail level 2 is the level with the second lowest degree of detail, and the information of the detail level 2 corresponds to the categories such as the position, distance, and how to get to the facility. Examples of the information with the detail level 2 are "About five minutes from here." and "About 500m after turning left at the next intersection."

The detail level 3 is the level with the third lowest degree of detail, and the information of the detail level 3 corresponds to the category of recommendation of information registration. Examples of the information with the detail level 3 include "Mr. BB has registered the restaurant AA as a favorite. How about you?" and "You can bookmark the restaurant AA on the smartphone."

The detail level 4 is the level with the third highest degree of detail, and the information of the detail level 4 corresponds to the category of the detailed information of the facility. Examples of the information with the detail level 4 include "There is a parking lot for ten cars.", "The lunch set is 1200 yen.", "The cake set is 500 yen." etc.

The detail level 5 is the level with the second highest degree of detail, and the information of the detail level 5 corresponds to the category of information for visiting the facility. Examples of the information with the detail level 5 include "You can add the restaurant AA to the current route.", "You can reserve the restaurant AA now. ", etc.

The detail level 6 is the level with the highest degree of detail, and the information of the detail level 6 corresponds to the category of the follow-up information after the visit of the facility. Examples of information with the detail level 6 include "You can get a free cup of coffee by three more visits.", "Was the restaurant good?", "Rate the restaurant by five stages.", etc.

Thus, the facility information according to the embodiment is prepared by classifying it into multiple detail levels. When providing facility information, information is provided in the order from the information of low detail level to the information of the high detail level. Although the detail level is set to 6 levels in the example of FIG. 4, this is merely an example, and the facility information may be classified into the levels larger or smaller than 6 levels. Further, the category of the information corresponding to each detail level is merely an example, and information of other category may be used.

### [Method of providing facility information]

Next, a method of providing the above facility information to the user will be described. Basically, the server device 200 determines facility information to be provided to the user based on the driving state information of the vehicle Ve transmitted by the upload signal S 1 from the voice output device 100 or the user's response to the information provision, and transmits the determined facility information to the voice output device 100 by the control signal S2. The voice output device 100 outputs the facility information included in the control signal S2 received from the server device 200 to the user by voice.

### (First example)

First, a first example of a method of providing facility information will be described. In the first example, the voice output device 100 outputs facility information, which is classified into a plurality of detail levels as described above, one by one. More specifically, the voice output device 100 first outputs information with the lowest detail level and detects a user's response thereto. Then, based on the user's response, if the user is expected to be interested in the facility information, the voice output device 100 outputs information with the detail level of one level higher. Thus, the voice output device 100 continues to output information with a higher detail level if there is a response by the user and the user is expected to be interested in the facility. This allows more detailed information to be provided to the user who is interested in the facility. On the other hand, if there is no response by the user or if it is expected from the user's response that the user's interest is low, the voice output device 100 stops providing information and does not provide more detailed information. This prevents the provision of information that is not desired by the user and prevents the user from feeling troublesome or being affected in driving.

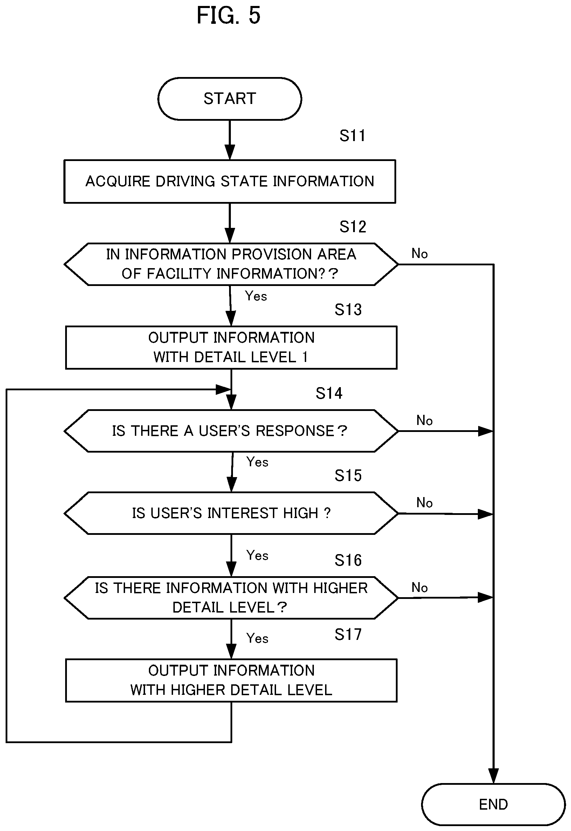

FIG. 5 is a flowchart illustrating information providing processing according to the first example. This processing is realized by the server device 200 shown in FIG. 3, which controls the voice output device 100. It is assumed that the server device 200 provides information about the facility X using the facility information illustrated in FIG. 4.

First, the control unit 114 of the voice output device 100 acquires the driving state information related to the current driving state of the vehicle Ve and transmits the information to the server device 200. The server device 200 acquires the driving state information from the voice output device 100 (step S11).

Next, the control unit 214 of the server device 200 determines whether or not the vehicle Ve is in the information provision area of the facility information on the basis of the driving state information acquired in step S11 (step S12). That is, the control unit 214 determines whether or not the driving state information of the vehicle Ve satisfies the trigger condition for providing the facility information of the facility X. For example, the control unit 214 determines that the vehicle Ve is in the information provision area of the facility information when the current position of the vehicle Ve is within the predetermined distance from the location of the facility X. In addition to the distance from the facility X, the current time or the like may be considered if the facility X is a restaurant or a cafe.

When it is determined that the vehicle Ve is not in the information provision area of the facility information (step S12: No), the control unit 214 ends the processing. On the other hand, when it is determined that the vehicle Ve is within the information provision area of the facility information (step S12: Yes), the control unit 214 first outputs the information of the detail level 1, i.e., the most schematic information by voice (step S13).

Next, the control unit 214 determines whether or not there is a user's response after outputting the information of the detail level 1 (step S14). Incidentally, the user's response includes, for example, an answer by voice and an operation on the input unit 113. If there is no user's response (step S14: No), the control unit 214 determines that the user is not interested in the facility and ends the processing.

On the other hand, when there is a user's response (step S14: Yes), the control unit 214 analyzes the user's response and determines whether or not the user's interest is high (step S15). For example, when the user's response is positive, the control unit 214 determines that user's interest is high. When the user's response is negative, the control unit 214 determines that the user's interest is low. Whether the user's response is positive or negative can be determined, for example, by analyzing the response voice of the user. When the user's interest is low (step S15: No), the processing ends.

On the other hand, when the user's interest is high (step S15: Yes), the control unit 214 determines whether or not there is information with a higher detail level (step S16). When there is no information with a higher detail level (step S16: No), the processing ends. On the other hand, when there is information with a higher detail level (step S16: Yes), the control unit 214 outputs information with a higher detail level, e.g., information with a detail level of one level higher (step S17). Then, the processing returns to step S14.

Thus, after outputting information of a certain detail level, the control unit 214 detects the user's response and predicts the user's interest in the facility. When it is determined that the user's interest is high, the control unit 214 further outputs information with a detail level higher than the previously output information. Thus, as long as the user continues to show his or her interest in the outputted information, the control unit 214 outputs more detailed information about the facility. This allows the user to be provided with sufficient information if the user desires.

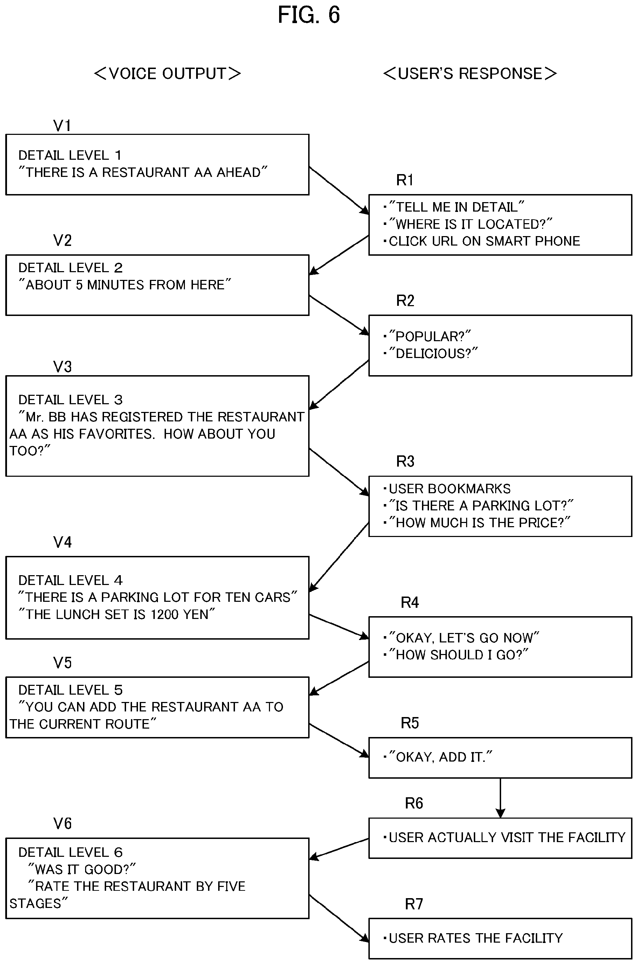

FIG. 6 illustrates an example of voice outputs of facility information by the voice output device 100 and user's responses. In this example, the voice output device 100 is assumed to output facility information by voice based on the facility information shown in FIG. 4. Incidentally, in FIG. 6, "V1" to "V6" indicate the voice outputs, and "R1" to "R7" indicate the user's responses.

First, as the voice output V1, the voice output device 100 outputs the voice output with the detail level 1 "There is a restaurant AA ahead.". As the response R1, the user utters "Tell me in detail." or "Where is it located?", or clicks URL of the restaurant AA on the smartphone that the user operates as the display unit 116.

The voice output device 100 determines that the user's interest is high based on the user's response R1 and outputs the voice output with the detail level 2 "About 5 minutes from here" as the voice output V2. As the response R2, the user makes an utterance such as "Popular?" or "Delicious?".

The voice output device 100 determines that the user's interest is high based on the response R2 of the user, and outputs the voice output V3 with the detail level 3 "Mr. BB registers the restaurant AA as his favorites. How about you too?" As the response R3, the user bookmarks the restaurant or utters such as "Is there a parking lot?" or "How much is the price?".

The voice output device 100 determines that the user's interest is high based on the user's response R3 and outputs the voice output V4 with the detail level 4 "There is a parking lot for ten carts", "The lunch set is 1200 yen", etc. As the response R4, the user utters " Okay, let's go now" or "How should I go?.

The voice output device 100 determines that the user's interest is high based on the user's response R4 and outputs the voice output V5 with the detail level 5 "You can add the restaurant AA to the current route.". As a response R5, the user utters "Okay, add it." and actually visit the facility as a response R6. Incidentally, the fact that the user visited the facility can be detected based on the position information of the vehicle Ve.

The voice output device 100 determines that the user's interest is high based on the user's response R6, and outputs the voice output V6 with the detail level 6 "Was it good?" or "Please rate the store in five stages" and the like after visiting the facility. When the user rates the facility as a response R7, the voice output device 100 stores the user's rating and ends the information provision of information about the facility.

In this manner, the voice output device 100 can provide more detailed information based on the user's response if the user's interest is expected to be high. As in the above example, the user's response may not be limited to utterances by the user, but may include instructions or operations for acquiring information about the facility, instructions or operations for storing information about the facility, visits of the facility, input of the rating of the facility, and the like.

### (Second example)

Next, a second example of a method of providing facility information will be described. In the first example, the voice output device 100 outputs facility information from the information with the lowest detail level. However, when the facilities subject to the information provision are within the user's living area, the user often already knows those facilities. For example, the user often knows the presence or location of the facility without knowing the details of the facility.

Therefore, in the second example, the detail level at which the provision of the facility information is started is changed according to whether or not the target facility is within the living area of the user. Specifically, the voice output device 100 outputs the facility information including the basic information when the target facility is outside the living area of the user, and outputs the facility information not including the basic information when the target facility is within the living area of the user.

Here, the basic information is determined to be information with a low detail level, such as an outline of the facility. For example, in the example of facility information shown in FIG. 4, the information with the detail levels 1 and 2 are used as the basic information, and the information with the detail levels 3 to 6 are used as the detailed information. When the target facility is outside the user's living area, the voice output device 100 outputs the information with the detail level 1 first, as in the first embodiment, and then outputs the information with a higher detail levels in order according to the user's response. On the other hand, when the target facility is in the user's living area, the user is presumed to know the outline and location of the facility. Therefore, the voice output device 100 does not output the information of the detail levels 1 and 2 corresponding to the basic information, and starts from the output of the information of the detail level 3. Then, the voice output device 100 outputs the information with a higher detail level in order according to the user's response.

Incidentally, the living area of the user can be determined based on, for example, the past driving history of the vehicle Ve of the user. In addition, the user may set his/her own living area centered on his/her home, company or the like in advance.

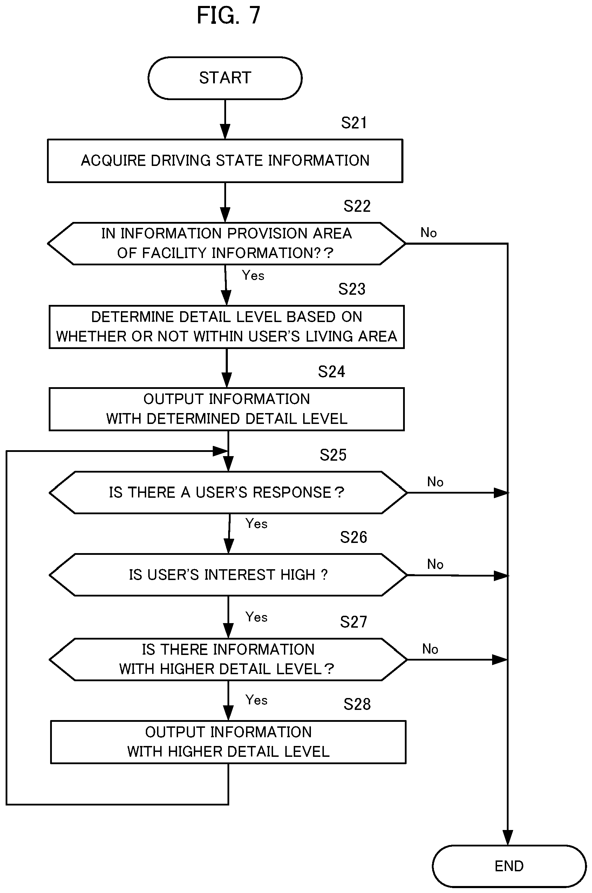

FIG. 7 is a flowchart illustrating information providing processing according to the second example. This processing is realized by the server device 200 shown in FIG. 3, which controls the voice output device 100.

First, the control unit 114 of the voice output device 100 acquires the driving state information related to the current driving state of the vehicle Ve and transmits the information to the server device 200. The server device 200 acquires the driving state information from the voice output device 100 (step S21).

Next, the control unit 214 of the server device 200 determines whether or not the vehicle Ve is in the information provision area of the facility information on the basis of the driving state information acquired in step S21 (step S22). That is, the control unit 214 determines whether or not the driving state information of the vehicle Ve satisfies the trigger condition for providing a certain facility information. For example, the control unit 214 determines that the vehicle Ve is in the information provision area of the facility information when the current position of the vehicle Ve is within a predetermined distance from the location of the facility.

When it is determined that the vehicle Ve is not in the information provision area of the facility information, the control unit 214 ends the processing (step S22: No). On the other hand, when it is determined that the vehicle Ve is within the information provision area of the facility information (step S22: Yes), the control unit 214 determines the detail level of the facility information to be outputted based on whether or not the current position of the vehicle Ve is within the living area of the user (step S23). For example, it is now supposed that the detail levels 1 and 2 in FIG. 4 are the basic information, as described above. In this instance, the control unit 214 determines to output the information of the detail level 1 when the current position of the vehicle Ve is outside the living area of the user. On the other hand, the control unit 214 determines to output the information of the detail level 3 when the current position of the vehicle Ve is within the living area of the user. Then, the control unit 214 outputs the information with the determined detail level by voice (step S24).

Since subsequent steps S25 to S28 are the same as steps S14 to S17 of the information providing processing of the first example shown in FIG. 5, the description thereof will not be repeated.

Thus, in the second example, when the target facility is in the user's living area, the output of the basic information is omitted and the output is started from the more detailed information. Therefore, it is possible to avoid outputting information that the user already knows, and to efficiently provide information that is useful to the user.

In the information providing processing described above, similarly to the first example, the control unit 214 outputs the facility information classified into a plurality of detail levels one by one according to the response of the user. Instead, the control unit 214 may output the facility information not one by one, but collectively. Specifically, when the current position of the vehicle Ve is outside the living area of the user, the control unit 214 may collectively output the information with multiple detail levels including the detail level 1 and selected from the lower detail levels, e.g., information with the detail levels 1 to 3. On the other hand, when the current position of the vehicle Ve is within the living area of the user, the control unit 214 includes outputs the information with multiple detail levels including the detail level 3 selected from the lower levels, e.g., the information with the detail levels 3 to 5. Also by this method, it is possible to avoid outputting information that the user already knows, and to efficiently provide information that is useful to the user.

In the information providing processing described above, the control unit 214 determines the detail level of information to be outputted in step S23 based on whether or not the current position of the vehicle Ve is within the living area of the user. Instead, the control unit 214 may determine the detail level of information to be outputted based on whether or not the target facility is within the living area of the user.

### (Third example)

Next, a third example of a method of providing facility information will be described. In the first example, the voice output device 100 first outputs the information with the lowest detail level. In the second example, the voice output device 100 changes the detail level of the facility information to be outputted first, depending on whether the position of the vehicle Ve or the facility is within the user's living area. In contrast, in the third example, the voice output device 100 determines the detail level of the facility information to be outputted first according to the number of visits of the user to the facility for which the information is to be provided.

Specifically, it is assumed that there are facility information classified into multiple detail levels as shown in FIG. 4. When the user visits the facility X for the first time, the voice output device 100 outputs information with the detail level 1. Thereafter, when the user visits the facility X for the second time, the voice output device 100 outputs the information with the detail level 2 rather than outputting the information with the detail level 1 again. Similarly, when the user visits the facility X for the third time, the voice output device 100 outputs information with the detail level 3. Thus, the voice output device 100 provides more detailed information as the number of visits of the user increases. This makes it possible to provide detailed information unknown to the user according to the user's awareness of the facility.

Once the facility information is provided according to the number of visits to the facility, then the voice output device 100 may determine whether or not to output more detailed information based on the user's response. For example, when the user's response after outputting the facility information is negative, the voice output device 100 may determine that the user is not interested in the facility and may not output the facility information on the next visit. Conversely, when the user's response after outputting the facility information is positive, the voice output device 100 may determine that the user is interested in the facility and may immediately output more detailed information without waiting for the next visit. The voice output device 100 transmits, to the server device 200, the information such as the number of times the user visited each facility, whether the user's response after outputting the information was positive or negative, and the like. The server device 200 stores the received information in the storage unit 212 or the like in association with the user.

If the user does not visit the facility for a predetermined period of time, the number of visits may be reset. For example, the predetermined period in this case may be a half year, one year, etc. Now, it is supposed that the predetermined period is set to one year. In this case, if the user makes a second visit within one year after the first visit to a certain facility, the voice output device 100 outputs the information with the detail level 2. On the other hand, if the user makes a second visit after one year or more from the first visit to a certain facility, the voice output device 100 outputs the information with the detail level 1. In this case, the voice output device 100 transmits the user's visit history for each facility to the server device 200, and the server device 200 stores the user's visit history in association with the user.

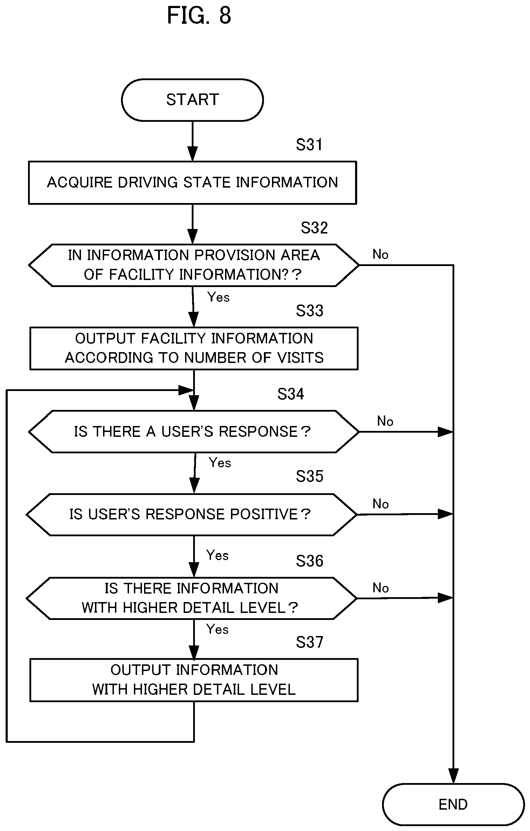

FIG. 8 is a flowchart of information providing processing according to a third example. This processing is realized by the server device 200 shown in FIG. 3, which controls the voice output device 100. Here, it is assumed that the information on the facility X is provided using the facility information shown in FIG. 4.

First, the control unit 114 of the voice output device 100 acquires the driving state information related to the current driving state of the vehicle Ve and transmits the information to the server device 200. The server device 200 acquires the driving state information from the voice output device 100 (step S31).

Next, the control unit 214 of the server device 200 determines whether or not the vehicle Ve is in the information provision area of the facility information on the basis of the driving state information acquired in step S31 (step S32). For example, when the current position of the vehicle Ve is within the predetermined distance from the location of the facility X, the control unit 214 determines that the vehicle Ve is within the information provision area of the facility information.

When it is determined that the vehicle Ve is not in the information provision area of the facility information (step S32: No), the control unit 214 ends the processing. On the other hand, when it is determined that the vehicle Ve is within the information provision area of the facility information (step S32: Yes), the control unit 214 outputs the facility information according to the number of visits to the facility X by the user (step S33). For example, at the time of the first visit to the facility X by the user, the control unit 214 outputs the information of the detail level 1. At the time of the second visit to the facility X by the user, the control unit 214 outputs the information of the detail level 2. In step S32, when it is determined that the vehicle Ve is within the information provision area of the facility information, the control unit 214 updates the total number of visits to the facility X by the user and transmits the updated number to the server device 200 to be stored.

Next, the control unit 214 determines whether or not there is a user's response after outputting the facility information in step S33 (step S34). When there is no user's response (step S34: No), the control unit 214 determines that the user is not interested in the facility and ends the processing.

On the other hand, when there is a response by the user (step S34: Yes), the control unit 214 analyzes the response by the user and determines whether or not the response by the user is positive (step S35). Whether the response by the user is positive or negative can be determined, for example, by analyzing the response voice of the user. When the user's response is not positive (step S35: No), the processing ends.

On the other hand, when the user's response is positive (step S35: Yes), the control unit 214 determines whether there is information with a higher detail level (step S36). When there is no information with a higher detail level (step S36: No), the processing ends. On the other hand, when there is information with a higher detail level (step S36: Yes), the control unit 214 outputs information with a higher detail level, specifically, information with a detail level of one level higher (step S37). Then, the processing returns to step S34.

Thus, in the third example, the control unit 214 first outputs the facility information with the detail level according to the number of visits of the facility X by the user. Thereafter, when the user's response is positive, the control unit 214 outputs information having a higher detail level. On the other hand, when the user's response is negative, and when there is no information with a higher detail level, the control unit 214 ends the processing.

In this way, the voice output device 100 provides more detailed information as the number of user's visits to the facility increases. This makes it possible to provide information that is not known by the user, i.e., information that is more useful to the user, depending on the user's awareness of the facility.

In the above-described embodiment, the program can be stored using various types of non-transitory computer-readable medium and supplied to a controller or the like that is a computer. The non-transitory computer-readable medium includes various types of tangible storage medium. Examples of the non-transitory computer-readable medium include a magnetic storage medium (e.g., a flexible disk, a magnetic tape, a hard disk drive), a magneto-optical storage medium (e.g., a magneto-optical disk), a CD-ROM (Read Only Memory), a CD-R, a CD-R/W, a solid-state memory (e.g., a mask ROM, a PROM (Programmable ROM), an EPROM (Erasable PROM), a flash ROM, and a RAM (Random Access Memory)).

While the present invention has been described with reference to the embodiments, the present invention is not limited to the above embodiments. Various modifications that can be understood by a person skilled in the art within the scope of the present invention can be made to the configuration and details of the present invention. That is, the present invention includes, of course, various modifications and modifications that may be made by a person skilled in the art according to the entire disclosure and technical concepts including the scope of claims. In addition, each disclosure of the above-mentioned patent documents cited shall be incorporated by reference in this document.

### DESCRIPTION OF REFERENCE NUMBERS

100 Voice output device
200 Server device
111, 211 Communication unit
112, 212 Storage unit
113 Input unit
114,214 Control unit
115 Sensor group
116 Display
117 Microphone
118 Speaker
119 Outside camera
120 Inside camera

## Claims

1. A voice output device comprising:
an acquisition means configured to acquire facility information including multiple information with different detail levels from basic information to detailed information;
a determination means configured to determine whether or not the voice output device or a facility subject to information provision is within a living area of a user; and
an output means configured to output the facility information including the basic information when the voice output device or the facility subject to the information provision is outside the living area of the user, and output the facility information that does not include the basic information when the voice output device or the facility subject to the information provision is within the living area of the user.

2. The voice output device according to claim 1, further comprising a detection means configured to detect a user's response to the outputted facility information,
wherein the output means outputs more detailed information than the outputted facility information from among the multiple information based on the user's response.

3. The voice output device according to claim 2, wherein the output means predicts a degree of user's interest based on the user's response, and outputs the detailed information based on the predicted degree of user's interest.

4. The voice output device according to claim 3, wherein the output means outputs the detailed information when it is predicted that the degree of user's interest is high.

5. The voice output device according to any one of claims 1 to 4, wherein the output means does not output the detailed information when the user's response is not detected.

6. The voice output device according to claim 1, wherein the facility information including the basic information and the facility information not including the basic information include the multiple information with different detail levels.

7. A voice output method comprising:
acquiring facility information including multiple information with different detail levels from basic information to detailed information;
determining whether or not the voice output device or a facility subject to information provision is within a living area of a user; and
outputting the facility information including the basic information when the voice output device or the facility subject to the information provision is outside the living area of the user, and outputting the facility information that does not include the basic information when the voice output device or the facility subject to the information provision is within the living area of the user.

8. A program causing a computer to execute processing of:
acquiring facility information including multiple information with different detail levels from basic information to detailed information;
determining whether or not the voice output device or a facility subject to information provision is within a living area of a user; and
outputting the facility information including the basic information when the voice output device or the facility subject to the information provision is outside the living area of the user, and outputting the facility information that does not include the basic information when the voice output device or the facility subject to the information provision is within the living area of the user.

9. A storage medium which stores the program according to claim 8.
